# EUROPEAN PATENT SPECIFICATION

(11) **EP 3 973 787 B1**
(45) Date of publication and mention of the grant of the patent: **11.10.2023**
(21) Application number: 20306081.9
(22) Date of filing: 23.09.2020
(51) Int. Cl.: A23J 3/14, A23J 3/22, A23L 33/185

(54) **PROCESS FOR PREPARING PLANT-BASED MEAT ANALOGUE**
VERFAHREN ZUR HERSTELLUNG VON PFLANZENBASIERTEM FLEISCHANALOG
PROCÉDÉ DE PRÉPARATION D'ANALOGUES DE VIANDE À BASE DE PLANTES

(43) Date of publication of application: 30.03.2022
(73) Proprietor: Les Nouveaux Fermiers, 75009 Paris (FR)
(72) Inventor: LEGAY, Guillaume, 91640 Fontenay-Lès-Briis (FR)
(74) Representative: Lavoix

(56) References cited:
- EP-A1- 3 508 067
- WO-A1-2020/089445
- WO-A2-2016/035058
- US-A1- 2006 035 003

## Description

The present invention concerns the preparation of plant-based meat analogue.

Increasing concerns about wellbeing in ethical, social, health, and ecological aspects have resulted in an increase in the number of vegetarians. The replacement of meat protein with plant protein has therefore become an important research topic. However, meat analogues are generally different from meat in terms of mouthfeel, texture, taste, and flavour.

Meat analogues are primarily vegetable based food products that contain proteins made from pulses (mainly soy), cereal protein, or fungi. There was a sharp increase in the consumption of these products around 2001 after a number of food safety crises (B.S.E., food and mouth disease) in the meat sector. Soon after that period, the growth in the market stabilised.

The difficulty with establishing a broad acceptance of meat analogues is probably related to several aspects. Firstly, these types of products are relatively new. Secondly, a large difference in the perceived product quality of meat and meat analogues is likely to play an important role. Both experience quality attributes such as convenience, freshness, and sensory characteristics, and credence quality attributes (e.g. healthiness) are important for consumer's buying behaviour of meat. Meat is especially appreciated for its sensory properties, its unique taste and texture. A few studies investigated consumers' evaluation of both meat and meat analogues and found that meat substitutes stayed behind in overall evaluation and in particular the sensory appreciation.

Patent application US 2006/035003 A1 discloses a process of making a soy protein containing product comprising hydrating a soy protein material and mixing the hydrated soy protein with an humectant comprising a colorant and a least one other agent which is a flavouring agent, a triglyceride, a food grade acid or acidic salt, a food grade base or basic salt, or a food grade emulsion.

Patent application EP 3 508 067 A1 discloses a process for the manufacture of a meat analogue from extruded plant-based proteins, hydrated and mixed with color blend, and optionally plant-based fat and stabilizers. The mixing is typically performed at 200-2000 rpm, such as 400-1500 rpm.

There is thus still an important need for meat analogues displaying sensory attributes such as chewing feeling very similar to "real" meat.

The present invention meets this need.

The present invention arises from the unexpected finding by the invention that, by mixing a batch comprising plant textured proteins and a batch comprising an emulsion of texturing and binding agents, it was possible to obtain a meat analogue displaying a chewing feeling very similar to the one of "real" meat, without using any animal ingredient.

The present invention thus concerns a method for manufacturing plant-based meat analogue products, said method comprising:
a) preparing a batch (P) of plant textured proteins by hydrating said plant textured proteins with an aqueous solution, optionally comprising at least one coloring and/or flavoring agent, under a low agitation inferior to 50 rpm,
b) preparing a batch (E) of texturing emulsion by
   b1) dispersing in oil a mixture comprising a texturing agent and at least one other binding agent,
   b2) mixing said dispersion with an aqueous solution under a low agitation inferior to 90 rpm, and
   b3) mixing the mixture obtained at step b2) under high shear conditions, thereby obtaining an emulsion,
c) mixing said batches (P) and (E) under a low agitation inferior to 70 rpm,
d) forming plant-based meat analogue products from the mixture obtained at step c).

### Detailed description of the invention

### Preparation of batch (P)

Step a) of the method of the invention consists in preparing a batch (P) of plant textured proteins by hydrating said plant textured proteins with an aqueous solution undera low agitation inferior to 50 rpm.

By "plant textured proteins", also called "textured vegetable protein" is meant herein a defatted plant flour product, typically a by-product of extracting plant oil. Plant textured proteins are usually made from high (50%) soy protein, soy flour or concentrate, but can also be made from cotton seeds, wheat, peas, fava beans and oats.

Said plant textured proteins are typically obtained by an extrusion process.

Plant textured proteins can typically be extruded into various shapes (chunks, flakes, nuggets, grains, and strips) and sizes. During the extrusion process, the defatted thermoplastic proteins are typically heated to 150-200°C, which denatures them into a fibrous, insoluble, porous network that can soak up as much as three times its weight in liquids.

By "aqueous solution" is meant herein a solution in which the solvent is water.

In a particular embodiment, said aqueous solution is water.

The water can be pure water, tap water, bottled water, deionized water, spring water, natural juice (*i.e.* liquid based extract from a non-animal source such as a plant or any part of a plant), modified natural juice, or a mixture thereof. Thus, the aqueous solution may be water further comprising salts or minerals or both.

In a particular embodiment, said aqueous solution further comprises at least one coloring and/or flavoring agent.

As used herein, the term "coloring agent" refers to a compound that confers a color on a food product.

Examples of suitable coloring agents include artificial colorants, natural colorants, natural extracts or powders (*e.g.* beet root extract or powder, pomegranate fruit extract, cherry extract, carrot extract, red cabbage extract, red seaweed extract), modified natural extracts, natural juices (*e.g.* beet root juice, pomegranate fruit juice, cherry juice, carrot juice, red cabbage juice, red seaweed juice), modified natural juices, erythrosine, fast green FCF, allura red AC, tartazine, sunset yellow FCF, brilliant blue FCF, indigotine, titanium oxide, annatto, anthocyanins. betanins, beta-APE 8 carotenal, beta-carotene, black currant, burnt sugar, canthaxanthin, caramel, carmine/carminic acid, cochineal extract, curcumin, lutein, carotenoids, monascin, paprika, riboflavin, saffron, turmeric, and combinations thereof.

In a particular embodiment, said coloring agent is beet root powder.

As used herein, the term "flavoring agent" refers to a volatile substance that activates aroma receptors in the olfactory system

Examples of flavoring agents include but are not limited to oil soluble flavoring compounds, water soluble flavoring compounds, volatile flavoring compounds, meat-like furans, aldehydes, guaicol, 3-methyl-butanal, methional, 2--acetyl-2-thiazoline, 2-ethyl-3,5-dimethylpyrazine, 2,3-diethyl-5-methylpyrazine, 3-hydroxy-4,5-dimethyl-2(5H)-furanone, 4-hydroxy-2,5-dimethyl-3(2H)-furanone, octen-3-ol, phenyl acetic acid, 2,4-decadienal, ionone beta, trithioacetone, benzyl mercaptan, furfuryl mercaptan, methyl furfuryl disulfide, oil onion, pyrazine, ammonium sulfide, dimethyl sulfide, acetoin, methional, para cresol, phenyl acetaldehyde, isovaleraldehyde, 5-methyl-2-phenyl-5-hexenal, homofuranol, 2-methyl tetrahydrofuran-3-thiol, methyl mercaptan, furaneol, indole, precursor molecules (*i.e.* molecules that can specifically or non-specifically react with each other or other compounds to produce agents that impart or enhance flavors; *e.g.* Maillard reaction precursors), and combinations and derivatives thereof.

In a particular embodiment, said aqueous solution used in step a) has a temperature lower than 10°C, more particularly a temperature lower than 9°C, lower than 8°C, lower than 7°C, lower than 6°C, or lower than 5°C. In still a particular embodiment, said aqueous solution used in step a) has a temperature comprised between 0°C and 10°C, between 1°C and 9°C, between 2°C and 8°C, between 3°C and 7°C, between 3°C and 6°C, between 3°C and 5°C, typically of 4°C.

By "hydrating plant textured proteins" is meant herein making said plant textured proteins absorb water.

Typically, said hydration can be performed by contacting said plant textured proteins with the aqueous solution defined above.

Said contacting may be implemented by immersing said plant textured proteins in said aqueous solution.

As will be understood by the skilled person, the period of time during which said hydration is performed needs to be sufficient to enable said plant textured proteins to absorb the water of the aqueous solution.

In a particular embodiment, said hydration is performed for a period of time comprised between 5 min and 24 hours, in particular between 10 min and 15 hours, between 15 min and 10 hours, between 20 min and 5 hours, between 25 min and 2 hours, between 30 min and 1 hour, between 30 min and 50 min, between 30 min and 45 min, between, 30 min and 40 min or between 30 min and 35 min.

In a particular embodiment; said hydration is performed for a period of time comprised between 15 min and 1h.

In the context of the invention, said hydration is performed under low agitation, in particular under low shear conditions, under an agitation inferior to 50 rpm.

In still a particular embodiment, said low agitation performed in step a) is implemented in a mixing equipment devoid of blades, for example in a paddle mixer.

### Preparation of batch (E)

Step b) of the method of the invention consists in preparing a batch (E) of texturing emulsion. Said step b) comprises the three following successive steps:
b1) dispersing in oil a mixture comprising a texturing agent and at least one other binding agent,
b2) mixing said dispersion with an aqueous solution under a low agitation inferior to 90 rpm, and
b3) mixing the mixture obtained at step b2) under high shear conditions, thereby obtaining an emulsion.

### b1) Dispersing step

By "texturing agent" is meant herein a component which increases, modifies and/or enhances the overall texture or mouthfeel of food products. Texturizing agents used herein are suitable for addition to a food product.

Texturing agents typically include thickening agents, gelling agents, stabilizing agents, emulsifying agents and binding agents.

In a particular embodiment, said texturing agent is selected from the group consisting of starches (such as arrowroot, cornstarch, katakuri starch, potato starch, sago, wheat flour, almond flour, tapioca and their starch derivatives), alginin, guar gum, locust bean gum, xanthan gum, collagen, egg whites, agar, carboxymethyl cellulose, methylcellulose, pectin and carrageenan.

In a particular embodiment, said texturing agent is methylcellulose.

By "binding agent" is meant herein any material or substance that holds or draws other materials together to form a cohesive whole mechanically, chemically, by adhesion or cohesion.

Examples of suitable binding agents include but are not limited to starches, in particular native or modified starches (e.g., starches from grains, starches from tuber, potato starch, sweet potato starch, corn starch, waxy corn starch, tapioca starch, tapioca, arrowroot starch, taro starch, pea starch, chickpea starch, rice starch, waxy rice starch, lentil starch, barley starch, sorghum starch, wheat starch, and physical or chemical modifications thereof (including *e.g.* pre-gelatinized starch, acetylated starch, phosphate bonded starch, carboxymethylated starch, hydroxypropylated starch)), protein isolates (*e.g.* from potato, soy, pea, lentil, chickpea, lupin, oat, canola, wheat), hydrolyzed protein isolates (*e.g,* hydrolyzed pea protein isolate, hydrolyzed soy protein isolate), protein concentrates (*e.g.* from algae, lentil, pea, soy, chickpea, rice, hemp, fava bean, pigeon pea, cowpea, vital wheat gluten), and emulsifying functional proteins (*e.g.* from algae, potato, soy, pea, lentil, chickpea, lupin, oat, canola, wheat).

In a particular embodiment, said at least one binding agent is selected from the group consisting of starches and emulsifying functional proteins.

In the context of the invention, the mixture comprising a texturing agent and at least one binding agent (which is not the texturing agent), is dispersed in oil.

By "oil" is meant herein any nonpolar chemical substance that is a viscous liquid at ambient temperatures and is both hydrophobic and lipophilic.

Suitable examples of oils include but are not limited to microbial oil, plant oil, algal oil, fungal oil, marine oil, almond oil, aloe vera oil, apricot kerne oil, avocado oil, baobab oil, calendula oil, canola oil, corn oil, cottonseed oil, evening primrose oil, grape oil, grape seed oil, hazelnut oil, jojoba oil, linseed oil, macadamia oil, natural oils, neem oil, non-hydrogenated oils, olive oil, palm oil, coconut oil, partially hydrogenated oils, peanut oil, rapeseed oil, sesame oil, soybean oil, sunflower oil, synthetic oils, vegetable oil, fatty acids suitable for human consumption (*e.g.* oils that are liquid at ambient temperature like avocado, mustard, coconut, cottonseed, fish, flax, seed, grape, olive, palm. peanut, rapeseed, safflower, sesame. soybean, sunflower; oils that are solid at ambient temperature like chocolate fat), sole fats (*e.g.* palm oil, palm kernel oil, coconut oil, cocoa butter, shea butter), soft fats (*e.g.* canola oil, soybean oil, sunflower oil, safflower oil, olive oil. nut oils), vegetable oils (*e.g.* from soy bean, corn, cotton seed, rapeseed, rice, peanut, and palm), and derivatives thereof.

### b2) Initial mixing step under low agitation

By "aqueous solution" is meant herein a solution in which the solvent is water.

In a particular embodiment, said aqueous solution is water.

The water can be pure water, tap water, bottled water, deionized water, spring water, natural juice (*i.e.* liquid based extract from a non-animal source such as a plant or any part of a plant), modified natural juice, or a mixture thereof. Thus, the aqueous solution may be water further comprising salts or minerals or both.

In the context of the invention, said mixing is performed under low agitation, in particular under low shear conditions, under an agitation inferior to 90 rpm, in particular under an agitation comprised between 10 rpm and 90 rpm, more particularly between 20 rpm and 90 rpm, between 30 rpm and 80 rpm, between 40 rpm and 70 rpm, or between 50 rpm and 60 rpm.

### b3) Mixing step under high shear conditions

Once a homogeneous mixture is obtained at step b), the mixture is mixed under high shear conditions, thereby obtaining an emulsion.

The term "emulsion" as used herein refers to a mixture of immiscible liquids in which one or more liquids ("dispersed phase(s)") are dispersed as fine droplets in another liquid ("continuous phase").

By "high shear conditions" is meant herein turbulent mixing conditions sufficient to emulsify the mixture.

As well-known from the skilled person, numerous devices can be used to perform such mixing such as rotor/stator homogenizers, in-line emulsifiers, static mixers, cutters or grinders.

In a particular embodiment, the mixing under high shear in step b3) is performed in a cutter or in a grinder.

When cutters are used, high revolutions per minute are preferred, typically at a speed higher than 2000 rpm, preferably at a speed comprised between 2000 and 3000 rpm, in particular a speed of 2500 rpm.

In a particular embodiment, the temperature of the emulsion obtained at the end of step b3) is lower than 6°C, more particularly lower than 5°C, still particularly lower than 4°C.

As will be understood by the skilled person, steps a) and b) of the method of the invention may be implemented successively in any order (a) and then b), or b) and then a)), or simultaneously in parallels.

Said batches can thus be stored, typically at a temperature lower than 10°C, for example at a temperature lower than 6°C, more particularly at a temperature lower than 4°C, before implementing step c) of the method of the invention.

### Mixing of batches (P) and (E)

Step c) of the method of the invention consists in mixing said batches (P) and (E) under low agitation inferior to 70 rpm.

In a particular embodiment, said batch (P) represents from 40% to 80% of the total weight of the mixture, preferably from 40% to 70%, still preferably from 45% to 60%, from 45% to 55%, or 50% of total weight of the mixture.

In a particular embodiment, said batch (E) represents from 20% to 60% of the total weight of the mixture, preferably from 30% to 60%, still preferably from 40% to 60%, from 45% to 55%, or 45% or 50% of total weight of the mixture.

In the context of the invention, said mixing at step c) is performed under low agitation, in particular under low shear conditions, under an agitation inferior to 70 rpm, for example an agitation of 50 rpm or 60 rpm.

The mixture obtained at step c) can then be submitted to optional treatment steps before the forming step d), such as total or partial mincing, or storing.

### Forming of meat analogue products

The method of the invention enables producing a meat analogue product of any form.

The term "meat analogue product" as used herein refers to a food product that is not derived from an animal but has structure, texture, and/or other properties comparable to those of animal meat. The term refers to uncooked, cooking and cooked meat analogue product.

More particularly, the meat analogue product produced by the method of the invention displays a chewing feeling similar to the one obtained with a meat product.

Step d) of the method of the invention consists in forming said meat analogue product in the desired form.

The plant-based meat analogue products formed in the context of the invention can for example be plant-based steaks, plant-based meat analogue balls or minced plant-based meat analogue.

As will be understood by the skilled person, the device used for forming said meat analogue product at step d) will depend on the particular form that one wants to obtain.

As clearly apparent from the present description, one advantage of the method of the invention is to obtain a plant-based meat analogue product, in particular giving a chewing feeling similar to one of "real" meat, without using meat.

Accordingly, in a particularly preferred embodiment, the method of the invention does not use any animal ingredient.

### Optional additional steps

After the forming step, the method of the invention may comprise additional steps of treatment of said plant-based meat analogue product.

In a particular embodiment, the method of the invention further comprises a step e) of freezing the plant-based meat analogue products formed at step d).

Said freezing step can be implemented by any technique well-known from the skilled person. For example, said plant-based meat analogue can be frozen in a freezing tunnel, typically at a temperature lower than -18°C.

In a particular embodiment, the method of the invention further comprises a step f) of packaging said frozen plant-based meat analogue products under modified atmosphere.

By "modified atmosphere" is meant herein the practice of modifying the composition of the internal atmosphere of a package in order to improve the shelf life, in particular by reducing the level of oxygen and replacing it with other gases.

The present invention will be further exemplified by the example below.

### Example

The present example shows a typical implementation of the method of the invention for producing plant-based steaks.

All along the process, all mixtures remained cold (approximately 4°C). In that purpose, all the ingredients were stored at 4°C, and used at that temperature.

### A. Batch 1 : textured proteins

The key ingredient of the method of the invention is plant textured proteins. Proteins are textured thank to an extrusion process. By hydrating the textured proteins, typical beef mouthfeel can be mimicked.

First step of the making process is to prepare the marinade for textured proteins hydration. Beetroot powder (food coloring) and flavors are dispersed in cold water (4°C) thank to a blender for 1 min.

Then, textured proteins and marinade are added into a mixing equipment, and slowly mixed for 1 hour. A slow mixing is particularly advantageous to avoid shredding the textured proteins. In that purpose, mixing equipment without blade and with a slow mixing mode is preferable (e.g. paddles mixer). It is also advantageous to keep the temperature close to 4°C.

If necessary, hydrated textured proteins (batch 1) can be store at 4°C before being mixed with the emulsion batch.

### B. Batch 2 : emulsion

The entire second batch is prepared in a bowl chopper (with at least 6 blades). All powdered ingredients (texturing and binding ingredients (i.e. methylcellulose, potato starch, protein isolate), beetroot powder) and sunflower oil are added into a bowl chopper. Then, powdered ingredients are dispersed in the oil at low speed (60 rpm).

As soon the mixture is homogenous, water is added into the bowl chopper. Mixing is maintained under a speed of 60 rpm until the mixture became homogeneous. The final mixture's temperature has to be low.

Then, the speed is increased to 2500 rpm, and kept until an emulsion get formed (1 to 3 min). At the end of this step, mixture's temperature is lower than 4°C.

A grinder, combined with a mixing equipment, can also be used to do the emulsion. Powdered ingredients and oil are added into a mixing equipment, and powdered ingredients are dispersed in the oil at low speed. Then, water is added into the mixing equipment, and the mixing is maintained under low speed until a homogenous mixture is formed.

The mixture is added into a grinder, and grinded once or several times to get an emulsion. The use of several blades and/or several plates is preferable to get a good emulsion. Also, it is preferable to use plates with small holes (e.g. holes diameter between 3 and 6 mm).

If necessary, emulsion (batch 2) can be stored at 4°C before being mixed with batch 1.

### C. End of the process

In the bowl chopper under a speed of 60 rpm, or in mixing equipment such as a paddle mixer, batch 1 and batch 2 are slowly mixed. It is particularly advantageous to mix slowly to avoid shredding the textured proteins.

Patties of 113 g, 90 mm diameter and 20 to 24 mm height are formed thanks to a forming machine.

Patties are frozen right after the forming thank to a freezing tunnel (temperature of the equipment is close to -24°C).

Then, patties are packed under modified atmosphere in order to improve their shelf life. If necessary, they can be stored (for a maximum of 6 months) at freezing temperature to be packed later.

## Claims

1. Method for manufacturing plant-based meat analogue products, said method comprising:
a) preparing a batch (P) of plant textured proteins by hydrating said plant textured proteins with an aqueous solution, optionally comprising at least one coloring and/or flavoring agent, under a low agitation inferior to 50 rpm,
b) preparing a batch (E) of texturing emulsion by
b1) dispersing in oil a mixture comprising a texturing agent and at least one other binding agent,
b2) mixing said dispersion with an aqueous solution under a low agitation inferior to 90 rpm, and
b3) mixing the mixture obtained at step b2) under high shear conditions, thereby obtaining an emulsion,
c) mixing said batches (P) and (E) under a low agitation inferior to 70 rpm,
d) forming plant-based meat analogue products from the mixture obtained at step c).

2. The method according to claim 1, further comprising a step e) of freezing the plant-based meat analogue products formed at step d).

3. The method according to claim 2, further comprising a step f) of packaging said frozen plant-based meat analogue products under modified atmosphere.

4. The method according to any one of claims 1 to 3, wherein said plant textured proteins are obtained by an extrusion process.

5. The method according to any one of claims 1 to 4, wherein said hydration is performed for a period of time comprised between 15 min and 1 h.

6. The method according to any one of claims 1 to 5, wherein said low agitation performed in step a) is implemented in mixing equipment devoid of blades.

7. The method according to any one of claims 1 to 6, wherein said aqueous solution used in step a) has a temperature lower than 10°C.

8. The method according to any one of claims 1 to 7, wherein said texturing agent is methylcellulose.

9. The method according to any one of claims 1 to 8, wherein said at least one binding agent is selected from the group consisting of starch and emulsifying functional proteins.

10. The method according to any one of claims 1 to 9, wherein the mixing under high shear in step b3) is performed in a cutter or in a grinder.

11. The method according to any one of claims 1 to 10, wherein the temperature of the emulsion obtained at the end of step b3) is lower than 6°C.

12. The method according to any one of claims 1 to 11, wherein the plant-based meat analogue product is selected from plant-based steaks, plant-based meat analogue balls and minced plant-based meat analogue.

13. The method according to any one of claims 1 to 12, wherein said method does not use any animal ingredient.

## Patentansprüche

1. Verfahren zum Herstellen von Fleischersatzprodukten auf pflanzlicher Basis, das Verfahren umfassend:
a) Herstellen einer Charge (P) von pflanzlichen texturierten Proteinen durch Hydratisieren der pflanzlichen texturierten Proteine mit einer wässrigen Lösung, optional umfassend mindestens einen Farb- und/oder Aromastoff, bei langsamem Rühren unter 50 U/min,
b) Herstellen einer Charge (E) einer Texturierungsemulsion durch
b1) Dispergieren eines Gemischs, umfassend ein Texturierungsmittel und mindestens ein anderes Bindemittel, in Öl,
b2) Mischen der Dispersion mit einer wässrigen Lösung bei langsamem Rühren unter 90 U/min, und
b3) Mischen des in Schritt b2) erlangten Gemischs unter hohen Scherkräften, wodurch eine Emulsion erlangt wird,
c) Mischen der Chargen (P) und (E) bei langsamem Rühren unter 70 U/min,
d) Bilden von Fleischersatzprodukten auf pflanzlicher Basis aus dem in Schritt c) erlangten Gemisch.

2. Verfahren nach Anspruch 1, ferner umfassend einen Schritt e) eines Einfrierens der in Schritt d) gebildeten Fleischersatzprodukte auf pflanzlicher Basis.

3. Verfahren nach Anspruch 2, ferner umfassend einen Schritt f) eines Verpackens der gefrorenen Fleischersatzprodukte auf pflanzlicher Basis unter modifizierter Atmosphäre.

4. Verfahren nach einem der Ansprüche 1 bis 3, wobei die pflanzlichen texturierten Proteine durch ein Extrusionsverfahren erlangt werden.

5. Verfahren nach einem der Ansprüche 1 bis 4, wobei die Hydratation über einen Zeitraum zwischen 15 Min. und 1 Std. ausgeführt wird.

6. Verfahren nach einem der Ansprüche 1 bis 5, wobei das in Schritt a) ausgeführte geringe Rühren in einer Mischanlage ohne Schaufeln implementiert ist.

7. Verfahren nach einem der Ansprüche 1 bis 6, wobei die in Schritt a) verwendete wässrige Lösung eine Temperatur von weniger als 10 °C aufweist.

8. Verfahren nach einem der Ansprüche 1 bis 7, wobei das Texturierungsmittel Methylcellulose ist.

9. Verfahren nach einem der Ansprüche 1 bis 8, wobei das mindestens eine Bindemittel ausgewählt ist aus der Gruppe, bestehend aus Stärke und emulgierenden funktionellen Proteinen.

10. Verfahren nach einem der Ansprüche 1 bis 9, wobei das Mischen unter hoher Scherung in Schritt b3) in einem Cutter oder einer Mühle ausgeführt wird.

11. Verfahren nach einem der Ansprüche 1 bis 10, wobei die Temperatur der am Ende von Schritt b3) erlangten Emulsion weniger als 6 °C ist.

12. Verfahren nach einem der Ansprüche 1 bis 11, wobei das Fleischersatzprodukt auf pflanzlicher Basis ausgewählt ist aus Steaks auf pflanzlicher Basis, Fleischersatzbällchen auf pflanzlicher Basis und gehacktem Fleischersatz auf pflanzlicher Basis.

13. Verfahren nach einem der Ansprüche 1 bis 12, wobei das Verfahren keine Bestandteile tierischen Ursprungs verwendet.

## Revendications

1. Procédé de fabrication de produits analogues à la viande à base de plantes, ledit procédé comprenant :
a) la préparation d'un lot (P) de protéines végétales texturées par hydratation desdites protéines végétales texturées avec une solution aqueuse, comprenant éventuellement au moins un agent colorant et/ou aromatisant, sous une faible agitation inférieure à 50 tr/min,
b) la préparation d'un lot (E) d'émulsion de texturation par
b1) dispersion dans l'huile d'un mélange comprenant un agent de texturation et au moins un autre liant,
b2) mélange de ladite dispersion avec une solution aqueuse sous faible agitation inférieure à 90 tr/min, et
b3) mélange du mélange obtenu à l'étape b2) dans des conditions de cisaillement élevé, ce qui permet d'obtenir une émulsion,
c) le mélange desdits lots (P) et (E) sous faible agitation inférieure à 70 tr/min,
d) la formation de produits analogues à la viande à base de plantes à partir du mélange obtenu à l'étape c).

2. Procédé selon la revendication 1, comprenant en outre une étape e) de congélation des produits analogues à la viande à base de plantes formés à l'étape d).

3. Procédé selon la revendication 2, comprenant en outre une étape f) d'emballage sous atmosphère modifiée desdits produits analogues à la viande à base de plantes congelés.

4. Procédé selon l'une quelconque des revendications 1 à 3, dans lequel lesdites protéines texturées végétales sont obtenues par un processus d'extrusion.

5. Procédé selon l'une quelconque des revendications 1 à 4, dans lequel l'hydratation est réalisée pendant une période de temps comprise entre 15 min et 1 h.

6. Procédé selon l'une quelconque des revendications 1 à 5, dans lequel ladite faible agitation réalisée à l'étape a) est mise en oeuvre dans un équipement de mélange dépourvu de pales.

7. Procédé selon l'une quelconque des revendications 1 à 6, dans lequel ladite solution aqueuse utilisée à l'étape a) a une température inférieure à 10 °C.

8. Procédé selon l'une quelconque des revendications 1 à 7, dans lequel ledit agent de texturation est la méthylcellulose.

9. Procédé selon l'une quelconque des revendications 1 à 8, dans lequel ledit au moins un liant est choisi dans le groupe constitué par l'amidon et les protéines fonctionnelles émulsifiantes.

10. Procédé selon l'une quelconque des revendications 1 à 9, dans lequel le mélange sous cisaillement élevé à l'étape b3) est réalisé dans un dispositif de coupe ou un broyeur.

11. Procédé selon l'une quelconque des revendications 1 à 10, dans lequel la température de l'émulsion obtenue à l'issue de l'étape b3) est inférieure à 6 °C.

12. Procédé selon l'une quelconque des revendications 1 à 11, dans lequel le produit analogue à la viande à base de plantes est choisi parmi les steaks à base de plantes, les boulettes analogues à la viande à base de plantes et un analogue à la viande à base de plantes haché.

13. Procédé selon l'une quelconque des revendications 1 à 12, dans lequel ledit procédé n'utilise aucun ingrédient animal.
